# EUROPÄISCHE PATENTSCHRIFT

(11) **EP 3 424 806 B1**
(45) Veröffentlichungstag und Bekanntmachung des Hinweises auf die Patenterteilung: **06.01.2021**
(21) Anmeldenummer: 18178213.7
(22) Anmeldetag: 18.06.2018
(51) Int. Cl.: B62D 33/067

(54) **SCHWENKVORRICHTUNG FÜR EIN FAHRERHAUS**
PIVOT FOR A DRIVING CAB
DISPOSITIF DE BASCULEMENT POUR UNE CABINE DE CONDUITE

(30) Priorität: 04.07.2017 AT 2802017
(43) Veröffentlichungstag der Anmeldung: 09.01.2019
(73) Patentinhaber: MAN Truck & Bus Österreich GesmbH, 4400 Steyr (AT)
(72) Erfinder: Wührleitner, Gerhard, 4400 Steyr (AT); Schindlegger, Markus, 4300 St. Valentin (AT)
(74) Vertreter: v. Bezold & Partner Patentanwälte - PartG mbB

(56) Entgegenhaltungen:
- JP-U- S 613 785
- US-A1- 2003 221 503
- US-A1- 2007 148 992

## Beschreibung

Die Erfindung betrifft eine Vorrichtung zur schwenkbaren Verbindung eines Fahrerhauses mit einem Fahrzeugrahmen eines Kraftfahrzeugs.

Es ist bekannt, dass ein Lastkraftwagen ein schwenkbares Fahrerhaus aufweisen kann. Das Fahrerhaus kann bezüglich des Rahmens gekippt werden, sodass ein Zugang zu Komponenten des Fahrzeugrahmens, zum Beispiel eines Verbrennungsmotors, erleichtert wird. Die Möglichkeit des Verschwenkens des Fahrerhauses relativ zum Fahrzeugrahmen erfordert eine daran angepasste Ausbildung und Anordnung von Verbindungsleitungen zwischen Komponenten des Fahrerhauses und Komponenten, die am Fahrzeugrahmen befestigt sind. Insbesondere sind die Verbindungsleitungen während des Verschwenkens einer Leitungslängung oder Leitungsverkürzung ausgesetzt, die bspw. mittels vorgehaltener Zusatzlängen für die Verbindungsleitungen ausgeglichen werden kann.

Die WO 2014/070075 A1 offenbart ein Kraftfahrzeug mit einem Fahrerhaus, das über ein Gelenk mit einem Fahrzeugrahmen verbunden ist. Das Fahrzeug weist einen Flüssigkeitsbehälter auf, der gelenkig mit dem Fahrzeugrahmen über ein Gelenk verbunden ist. Ein Abschnitt eines Leitungsbündels ist an dem Flüssigkeitsbehälter befestigt.

Die WO 2007/084050 A1 offenbart eine Verbindungsbaugruppe für einen Lastkraftwagen. Der Lastkraftwagen weist ein Chassis und eine schwenkbare Fahrerkabine auf. Eine Schwenkvorrichtung der Fahrerkabine weist einen Verbindungsarm auf. Flexible Verbindungsleitungen sind an dem Verbindungsarm befestigt.

Weitere Leitungshalterung für einen Lastkraftwagen mit schwenkbarem Fahrerhaus sind in der WO 2009/041862 A1 und der WO 2007/060496 A1 offenbart.

Die US 2003/221503 A1 offenbart einen Lastkraftwagen mit schwenkbarer Fahrerkabine. Der Lastkraftwagen weist einen Fahrzeugrahmen mit einem Seitenlängsträger auf, der ein U-Profil aufweist. Kabel sind innerhalb des U-Profils des Seitenlängsträgers entfernt von der Schwenklagerung der Fahrerkabine geführt.

Die US 2007/148992 A1 bezieht sich auf eine Kabelbaum-Installationsstruktur eines beweglichen Gelenkkörpers, bei der der bewegliche Körper, wie beispielsweise eine Tür eines Kraftfahrzeugs, durch eine Verbindung so getragen wird, dass er geöffnet und geschlossen wird, und ein Stromversorgungskabelbaum entlang der Verbindung installiert ist und so angeordnet ist, dass er sich vertikal nach oben erstreckt, und diese nach oben verlaufenden Abschnitte beim Öffnen und Schließen der Tür verdreht werden.

Die JP S61 3785 U offenbart eine Vorrichtung zum Verriegeln eines Kabels, das einen Betriebsteil einer schwenkbar gelagerten Kabine und jeden Teil eines Fahrgestells in der Nähe eines Drehpunktes der Kabinenneigung verbindet.

Der Erfindung liegt die Aufgabe zu Grunde, eine verbesserte Anordnung von Verbindungsleitungen, die Komponenten des Fahrerhauses mit Komponenten am Fahrzeugrahmen verbinden, vorzusehen. Insbesondere soll eine platzsparende Anordnung der Verbindungsleitungen vorgesehen werden, die zu keiner oder nur einer geringen Längung und Verkürzung der Verbindungsleitungen beim Schwenken des Fahrerhauses führt.

Die Aufgabe wird gelöst durch eine Vorrichtung gemäß dem unabhängigen Anspruch. Vorteilhafte Weiterbildungen sind in den abhängigen Ansprüchen und der Beschreibung angegeben.

Die Vorrichtung ist zur schwenkbaren Verbindung eines Fahrerhauses mit einem Fahrzeugrahmen eines Kraftfahrzeugs, insbesondere Nutzfahrzeugs, vorgesehen. Die Vorrichtung weist eine erste Leitung zum Anschließen an eine Komponente des Fahrerhauses auf. Die Vorrichtung weist einen ersten Längsträger, insbesondere einen Schwingenarm, auf. Der erste Längsträger weist ein Lager zum schwenkbaren Verbinden des Fahrerhauses mit dem ersten Längsträger auf. Der erste Längsträger weist eine erste Ausnehmung (zum Beispiel Vertiefung, Kanal, Tunnel, Durchgang) auf. Die Ausnehmung erstreckt sich entlang einer Längsachse des ersten Längsträgers. Ein Abschnitt der ersten Leitung erstreckt sich zumindest teilweise innerhalb und entlang der ersten Ausnehmung.

Die Vorrichtung ermöglicht eine platzsparende Anordnung einer (Verbindungs-) Leitung zwischen dem Fahrerhaus und dem Fahrzeugrahmen in dem Längsträger. Da der Längsträger das Schwenklager zum Verschwenken des Fahrerhauses aufweist, kann die Leitung auch nahe zu einer Schwenkachse des Schwenklagers geführt werden. Dadurch kann eine Längung oder Verkürzung der Leitung beim Verschwenken des Fahrerhauses verringert werden. Die Aufnahme der Leitung in der Ausnehmung des Längsträgers stellt zudem eine sichere Aufnahme dar, die Kollisionen und Beschädigungen der Leitung während des Verschwenkens verhindert.

In einer Ausführungsform weist die Vorrichtung ferner eine zweite Leitung auf. Der erste Längsträger weist eine zweite Ausnehmung auf. Die zweite Ausnehmung erstreckt sich entlang der Längsachse des ersten Längsträgers, vorzugsweise im Wesentlichen parallel zur ersten Ausnehmung. Ein Abschnitt der zweiten Leitung erstreckt sich zumindest teilweise innerhalb und entlang der zweiten Ausnehmung. Folglich können auch mehrere Leitungen in mehreren Ausnehmungen des ersten Längsträgers platzsparend angeordnet werden.

Insbesondere können die erste Leitung und/oder die zweite Leitung zumindest abschnittsweise flexibel ausgebildet sein. Vorzugsweise können die erste Leitung und/oder die zweite Leitung in einem Bereich (zum Beispiel Knickbereich), der am dichtesten zu einer vom Lager definierten Schwenkachse angeordnet ist, flexibel ausgebildet sein.

Beispielsweise kann der Abschnitt der ersten Leitung vollständig in der ersten Ausnehmung aufgenommen sein und/oder der Abschnitt der zweiten Leitung nur teilweise in der zweiten Ausnehmung aufgenommen sein. Der Abschnitt der zweiten Leitung kann insbesondere bezüglich einer Querachse (Querrichtung) des ersten Längsträgers aus der zweiten Ausnehmung vorstehen.

In einer bevorzugten Ausführungsform ist die erste Ausnehmung und/oder die zweite Ausnehmung als eine Vertiefung, insbesondere eine Längsnut, ausgebildet. Alternativ kann die erste Ausnehmung und/oder die zweite Ausnehmung auch beispielsweise als Kanal, Tunnel, Bohrung oder Durchgang durch den ersten Längsträger ausgebildet sein.

In einer weiteren Ausführungsform sind die erste Ausnehmung und die zweite Ausnehmung voneinander durch einen Steg des ersten Längsträgers getrennt.

Vorteilhafterweise kann die erste Ausnehmung und/oder die zweite Ausnehmung in einem Querschnitt senkrecht zur Längsachse des Längsträgers ein C-förmiges Profil aufweisen.

Insbesondere können die erste Ausnehmung und die zweite Ausnehmung in einem Querschnitt senkrecht zur Längsachse des Längsträgers ein gemeinsames E-förmiges oder W-förmiges Profil aufweisen.

In einer besonders bevorzugten Ausführungsform ist die erste Leitung so in der ersten Ausnehmung und/oder die zweite Leitung so in der zweiten Ausnehmung geführt, dass es im Wesentlichen zu keiner Leitungslängung und/oder Leitungsverkürzung während einer Schwenkbewegung des Fahrerhauses um das Lager kommt. Mit anderen Worten gesagt, die erste Ausnehmung und/oder die zweite Ausnehmung ist so ausgebildet, dass es im Wesentlichen zu keiner Leitungslängung und/oder Leitungsverkürzung während einer Schwenkbewegung des Fahrerhauses um das Lager kommt.

In einem Ausführungsbeispiel definiert das Lager eine Schwenkachse, um die das Fahrerhaus schwenkbar ist. Die erste Leitung und/oder die zweite Leitung ist so angeordnet, dass sie die Schwenkachse kreuzt oder zumindest annähernd kreuzt (schneidet).

Wie hierin verwendet, bedeutet der Ausdruck "annähernd kreuzt", dass die entsprechende Leitung so dicht an der Schwenkachse angeordnet ist, dass es im Wesentlichen zu keiner oder nur einer geringen Leitungslängung und/oder Leitungsverkürzung während einer Schwenkbewegung des Fahrerhauses um das Lager kommt.

In einem bevorzugten Ausführungsbeispiel kreuzt (schneidet) ein Knickbereich der ersten Leitung und/oder der zweiten Leitung die Schwenkachse oder kreuzt die Schwenkachse zumindest annähernd. Vorzugsweise ist der Knickbereich der ersten Leitung außerhalb der ersten Ausnehmung positioniert und/oder der Knickbereich der zweiten Leitung außerhalb der zweiten Ausnehmung positioniert.

Insbesondere kann der Knickbereich einen rechten Winkel einschließen, wenn das Fahrerhaus nicht verschwenkt ist, d. h. auf dem Fahrzeugrahmen in Betriebsstellung aufsitzt.

In einem weiteren Ausführungsbeispiel weist die Vorrichtung ferner mindestens ein Halteelement auf. Das Halteelement hält den Abschnitt der ersten Leitung in der ersten Ausnehmung und/oder den Abschnitt der zweiten Leitung in der zweiten Ausnehmung.

Vorzugsweise können die erste Leitung und die zweite Leitung von einem oder mehreren gemeinsamen Halteelementen in der ersten und zweiten Ausnehmung gehalten werden.

Insbesondere können zum Halten der ersten Leitung und/oder der zweiten Leitung mindestens zwei Halteelemente vorgesehen sein, die entlang der Längsachse des Längsträgers voneinander beabstandet angeordnet sind.

In einer Ausführungsvariante umgibt das mindestens eine Halteelement den ersten Längsträger in einer Umfangsrichtung um die Längsachse des ersten Längsträgers.

In einer weiteren Ausführungsvariante ist ein Halteelement zwischen zwei nebeneinander angeordneten Vorsprüngen des ersten Längsträgers positioniert. Somit kann ein Verschieben des Halteelements durch die Vorsprünge verhindert werden.

In einer weiteren Ausführungsform ist ein Halteelement zwischen einem Abschnitt mit sich erweiterndem Querschnitt des ersten Längsträgers und einem Vorsprung des ersten Längsträgers, der neben den Abschnitt mit sich erweiterndem Querschnitt angeordnet ist, angeordnet. Somit kann ein Verschieben des Halteelements durch den Abschnitt mit sich erweiterndem Querschnitt und dem Vorsprung verhindert werden.

In einem bevorzugten Ausführungsbeispiel sind der oder die Vorsprünge so ausgebildet, dass eine Verschiebung des Halteelements in einer Richtung entlang der Längsachse des ersten Längsträgers durch einen Kontakt mit dem oder den Vorsprüngen begrenzt wird. Insbesondere können sich der oder die Vorsprünge von Wandbereichen der Ausnehmungen nach außen erstrecken. Vorzugsweise können sich der oder die Vorsprünge entlang einer Querrichtung des ersten Längsträger nach außen erstrecken. Der oder die Vorsprünge können an den Längsseiten, der Oberseite und/oder der Unterseite des ersten Längsträgers vorgesehen sein.

Vorzugsweise sind die Vorsprünge entlang der Längsachse des Längsträgers voneinander beabstandet angeordnet.

In einem weiteren Ausführungsbeispiel ist das mindestens eine Halteelement als Kabelbinder ausgebildet. Somit kann ein zuverlässiges und preiswertes Halteelement verwendet werden.

In einer Ausführungsvariante ist die erste Leitung und/oder die zweite Leitung eine elektrische, pneumatische oder hydraulische Leitung.

In einer weiteren Ausführungsvariante weist die Vorrichtung ferner einen zweiten Längsträger, insbesondere einen Schwingenarm, mit einem Lager zum schwenkbaren Verbinden des Fahrerhauses mit dem zweiten Längsträger auf. Die Vorrichtung kann zudem ein Stabilisationsrohr aufweisen, das den ersten Längsträger und den zweiten Längsträger miteinander verbindet.

Es ist auch möglich, dass der erste Längsträger und/oder der zweite Längsträger ein weiteres Lager, insbesondere ein Elastomerlager, zur Verbindung des Längsträgers mit dem Fahrzeugrahmen aufweist.

Insbesondere können das Lager und das weitere Lager des entsprechenden Längsträgers an einander gegenüberliegenden Endbereichen des Längsträgers angeordnet sein.

Die Erfindung betrifft auch ein Kraftfahrzeug, insbesondere Nutzfahrzeug. Das Kraftfahrzeug weist ein Fahrerhaus, einen Fahrzeugrahmen und eine Vorrichtung wie hierin offenbart auf, die das Fahrerhaus verschwenkbar (kippbar) mit dem Fahrzeugrahmen verbindet. Vorzugsweise verbindet die erste Leitung und/oder die zweite Leitung eine Komponente des Fahrerhauses mit einer rahmenfest am Fahrzeugrahmen angebrachten Komponente.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Ansicht eines Nutzfahrzeugs mit verschwenkbarem Fahrerhaus;
- Figur 2: eine schematische Ansicht eines Nutzfahrzeugs mit verschwenktem (gekipptem) Fahrerhaus;
- Figur 3: eine perspektivische Ansicht einer Vorrichtung zum Verschwenken eines Fahrerhauses;
- Figur 4: eine weitere Ansicht der Vorrichtung zum Verschwenken des Fahrerhauses;
- Figur 5: eine weitere Ansicht der Vorrichtung zum Verschwenken des Fahrerhauses; und
- Figur 6: einen Querschnitt eines Längsträgers der Vorrichtung zum Verschwenken.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

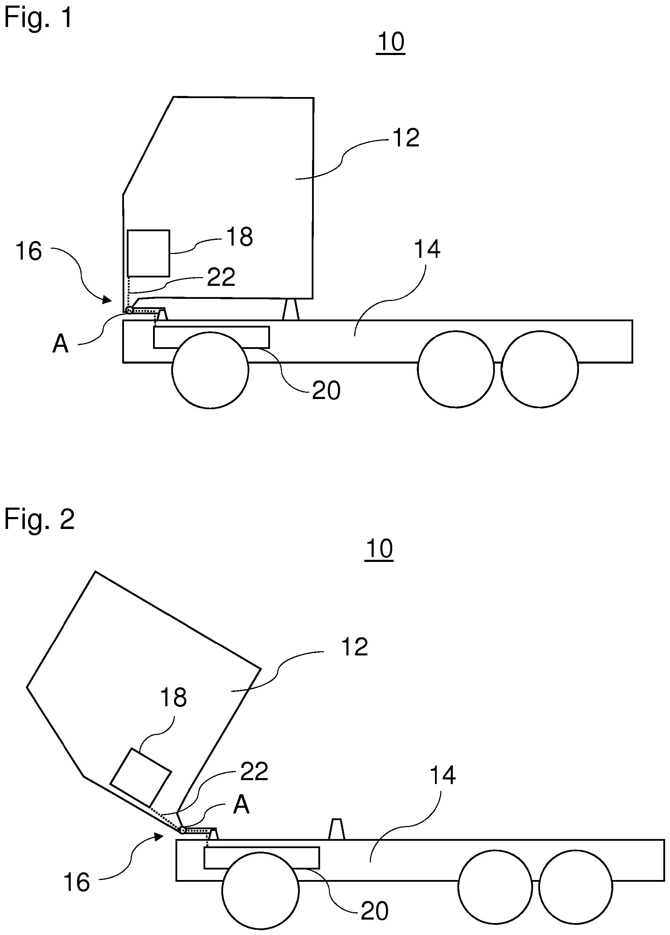

Die Figuren 1 und 2 zeigen ein Kraftfahrzeug 10. Das Kraftfahrzeug 10 weist ein Fahrerhaus 12, einen Fahrzeugrahmen (Chassis) 14 und eine Vorrichtung 16 zum Verschwenken (Kippen) des Fahrerhauses 12 relativ zum Fahrzeugrahmen 14 auf.

In der dargestellten Ausführungsform ist das Kraftfahrzeug 10 als ein Nutzfahrzeug in Form eines Lastkraftwagens ausgebildet. Das Kraftfahrzeug 10 kann jedoch auch eine andere Ausbildung mit verschwenkbarem Fahrerhaus umfassen.

Das Fahrerhaus 12 weist eine Mehrzahl von Komponenten 18 auf. Die Komponenten 18 dienen insbesondere zum Steuern und Fahren des Kraftfahrzeugs 10. Beispiele für die Komponenten 18 sind ein Lenkrad, ein Gaspedal, eine Bremse, eine Geschwindigkeitsanzeige usw.

Im oder am Fahrzeugrahmen 14 sind weitere Komponenten 20 des Kraftfahrzeugs 10 angebracht, zum Beispiel ein Motor, insbesondere Verbrennungsmotor, ein Antriebsstrang usw.

Es kann notwendig sein, eine oder mehrere Komponenten 18 des Fahrerhauses 12 mit einer oder mehreren Komponenten 20 am Fahrzeugrahmen 14 mithilfe von Leitungen 22 zu verbinden. So können beispielsweise die Komponenten 18 mit Strom, Hydraulikfluid oder Druckluft versorgt oder Steuersignale von den Komponenten 18 zu bestimmten Komponenten 20 am Fahrzeugrahmen 14 übertragen werden.

Für Wartungen und Reparaturen kann das Fahrerhaus 12 mittels der Vorrichtung 16 verschwenkt werden. So kann beispielsweise ein verbesserter Zugang zu dem Motor des Kraftfahrzeugs 10 ermöglicht werden. Im Einzelnen ist das Fahrerhaus 12 um eine Schwenkachse A nach vorne bezüglich einer Fahrzeugausrichtung schwenkbar (siehe Figur 2).

Die Vorrichtung 16 weist einen Längsträger an jeder Fahrzeuglängsseite (d. h., auf der linken Fahrzeugseite und auf der rechten Fahrzeugseite) auf. Die Längsträger sind über ein Stabilisatorrohr miteinander verbunden. Das Fahrerhaus 12 ist über ein Schwenklager mit jedem Längsträger verbunden.

Beim Verschwenken des Fahrerhauses 12 mittels der Vorrichtung 16 werden die Leitungen 22 mitbewegt. Um im Wesentlichen eine Längung und Verkürzung der Leitungen 22 beim Verschwenken des Fahrerhauses 12 zu verhindern, sind die Leitungen 22 auf spezielle Weise mit der Vorrichtung 16 gekoppelt, wie nachfolgend im Detail beschrieben ist.

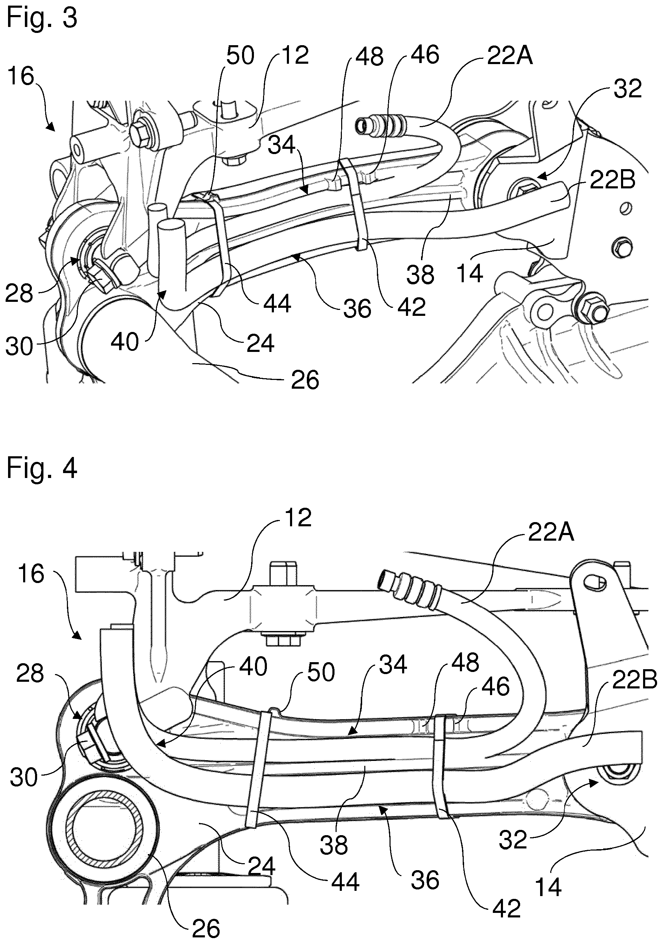

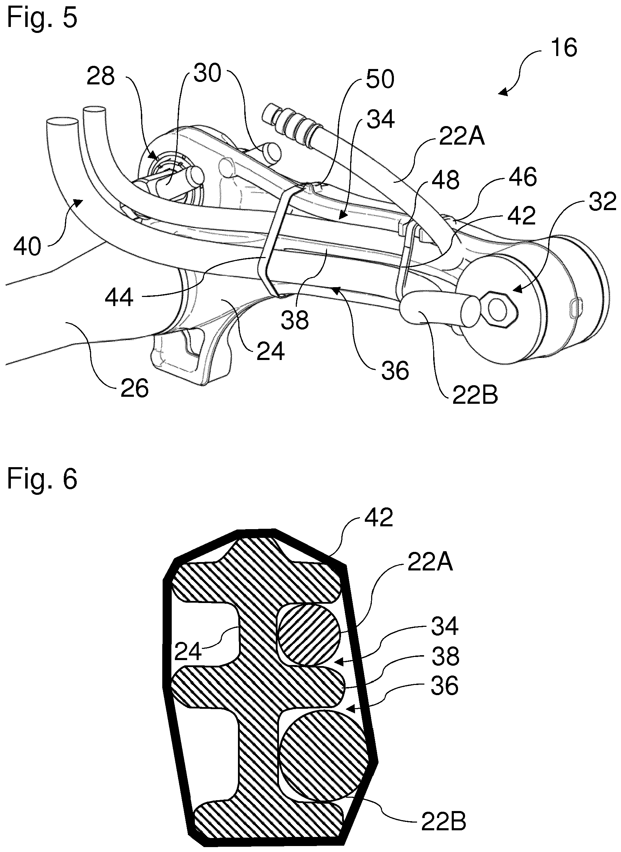

Die Figuren 3 bis 5 zeigen verschiedene Ansichten eines Bereichs der Vorrichtung 16. Im Einzelnen ist ein Längsträger auf der rechten Fahrzeugseite sowie teilweise der den Längsträger umgebende Bereich dargestellt. Die Figur 6 zeigt einen Querschnitt des Längsträgers der Vorrichtung 16.

Die Vorrichtung 16 weist einen Längsträger (einen Schwingenarm) 24 und ein Stabilisatorrohr 26 auf.

An einem ersten Ende weist der Längsträger 24 ein Schwenklager (Kipplager) 28 auf. Das Schwenklager 28 verbindet den Längsträger 24 schwenkbar mit dem Fahrerhaus 12. Im Einzelnen ist ein beispielsweise als Gussteil ausgebildeter Lagerbock des Fahrerhauses 12 über Schrauben 30 mit dem Schwenklager 28 verbunden. Das Schwenklager 28 definiert die Schwenkachse A (vgl. Figuren 1 und 2). Das Schwenklager 28 ist in einem ersten Endbereich des ersten Längsträgers 24 angeordnet.

An einen dem ersten Endbereich gegenüberliegenden Endbereich ist der Längsträger 24 beispielsweise über ein Elastomerlager 32 mit einem Lagerbock des Fahrzeugrahmens 14 verbunden. Das Elastomerlager 32 kann beispielsweise eine Übertragung von Vibrationen und Körperschall zwischen dem Fahrzeugrahmen 14 und dem Längsträger 24 (und damit dem Fahrerhaus 12) dämpfen.

Über das Stabilisatorrohr 26 ist der Längsträger 24 mit einem weiteren Längsträger (nicht dargestellt) auf einer gegenüberliegenden Fahrzeugseite (der linken Fahrzeugseite) verbunden. Das Stabilisatorrohr 26 dient als eine Längs- und Querführung für das Fahrerhaus 12 und stabilisiert das Fahrerhaus 12 gegen Wanken. Der weitere Längsträger kann beispielsweise wie der Längsträger 24 oder ohne Ausnehmungen für Leitungen vorgesehen sein.

Der Längsträger 24 weist eine erste Ausnehmung 34 und eine zweite Ausnehmung 36 auf. Die Ausnehmungen 34, 36 verlaufen im Wesentlichen parallel zueinander entlang einer Längsachse des Längsträgers 24. Die Ausnehmungen 34, 36 sind durch einen Steg 38 voneinander getrennt. Die Ausnehmung 34, 36 sind in Form von Vertiefungen vorgesehen. In anderen Ausführungsformen können die Ausnehmungen auch als Kanäle oder Durchgänge (Tunnel) im Längsträger 24 vorgesehen sein.

Ein Abschnitt einer ersten Leitung 22A ist in der ersten Ausnehmung 34 angeordnet. Ein Abschnitt einer zweiten Leitung 22B ist in der zweiten Ausnehmung 36 angeordnet. Die Leitungen 22A, 22B können beispielsweise elektrische, pneumatische oder hydraulische Leitungen sein.

Die Leitungen 22A, 22B sind so in den Ausnehmungen 34, 36 geführt, dass sie nahe oder durch die von dem Schwenklager 28 definierte Schwenkachse A (siehe Figuren 1 und 2) geführt werden. Dadurch kommt es beim Schwenken (Kippen) des Fahrerhauses 12 zu keiner oder nur zu einer geringen Längung oder Verkürzung der Leitungen 22A, 22B. Somit muss, wenn überhaupt, nur eine geringe Zusatzlänge für die Leitungen 22A, 22B vorhanden sein, um eine Beschädigung der Leitungen 22A, 22B beim Verschwenken des Fahrerhauses 12 zu verhindern.

Die Leitungen 22A, 22B weisen einen Knickbereich 40 im Bereich der Schwenkachse A auf. Beim Verschwenken des Fahrerhauses 12 verändert sich eine Leitungsführung der Leitungen 22A, 22B insbesondere in diesem Knickbereich 40.

Halteelemente 42, 44 halten die Leitungen 22A, 22B in den Ausnehmungen 34, 36. Um ein Verrutschen der Halteelemente 42, 44 zu verhindern, kann der Längsträger 24 Vorsprünge 46, 48, 50 aufweisen. Die Vorsprünge 46, 48, 50 erstrecken sich von Wandbereichen der Ausnehmungen 34, 36 nach außen.

Im Einzelnen ist das Halteelement 42 bezüglich einer Verschiebung entlang einer Längsachse des Längsträgers 24 zwischen den Vorsprüngen 46 und 48 gesichert. Das Halteelement 44 ist zwischen einem sich erweiternden Bereich des Längsträgers 24 und dem Vorsprung 50 entsprechend gesichert. Die Halteelemente 42, 44 können beispielsweise in Form von Kabelbindern vorgesehen sein.

In der Figur 6 ist im Detail gezeigt, dass die erste Leitung 22A vollständig innerhalb der ersten Ausnehmung 34 vorgesehen ist. Die zweite Leitung 22B ist teilweise innerhalb der zweiten Ausnehmung 36 vorgesehen. Die Dimensionierung der Ausnehmungen im Längsträger kann bspw. festigkeits- oder bauraumabhängig vorgenommen werden.

Somit sind die Leitungen 22A, 22B platzsparend untergebracht. Zusätzlich wird durch die Befestigung an dem Längsträger 24, eine Führung der Leitungen 22A, 22B nahe der Schwenkachse A ermöglicht, wodurch es nur zu einer geringen Längung oder Verkürzung der Leitungen 22A, 22B beim Verschwenken des Fahrerhauses 12 kommt.

In anderen Ausführungsformen können beispielsweise mehr oder weniger Ausnehmungen zum Aufnehmen von mehr oder weniger Leitungen im Längsträger vorgesehen sein. Die Leitungen können auch zu einem Leitungsbündel gebündelt sein.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen.

### Bezugszeichenliste

- 10: Kraftfahrzeug (Lastkraftwagen)
- 12: Fahrerhaus
- 14: Fahrzeugrahmen (Chassis)
- 16: Vorrichtung zum Verschwenken (Schwenkvorrichtung/Kippvorrichtung)
- 18: Komponente(n)
- 20: Komponente(n)
- 22: Leitungen
- 22A: Erste Leitung
- 22B: Zweite Leitung
- 24: Längsträger (Schwingenarm)
- 26: Stabilisatorrohr
- 28: Schwenklager (Kipplager)
- 30: Schraube
- 32: Elastomerlager
- 34: Erste Ausnehmung
- 36: Zweite Ausnehmung
- 38: Steg
- 40: Knickbereich
- 42: Erstes Halteelement
- 44: Zweites Halteelement
- 46: Vorsprung
- 48: Vorsprung
- 50: Vorsprung

## Patentansprüche

1. Vorrichtung (16) zur schwenkbaren Verbindung eines Fahrerhauses (12) mit einem Fahrzeugrahmen (14) eines Kraftfahrzeugs (10), insbesondere Nutzfahrzeugs, aufweisend:
eine erste Leitung (22A) zum Anschließen an eine Komponente (18) des Fahrerhauses (12);
**gekennzeichnet durch:**
einen ersten Längsträger (24), der ein Schwingenarm ist, mit:
einem Lager (28) zum schwenkbaren Verbinden des Fahrerhauses (12) mit dem ersten Längsträger (24); und
einer ersten Ausnehmung (34), die sich entlang einer Längsachse des ersten Längsträgers (24) erstreckt, wobei ein Abschnitt der ersten Leitung (22A) sich zumindest teilweise innerhalb und entlang der ersten Ausnehmung (34) erstreckt.

2. Vorrichtung (16) nach Anspruch 1, ferner aufweisend:
eine zweite Leitung (22B), wobei
der erste Längsträger (24) eine zweite Ausnehmung (36) aufweist, die sich entlang der Längsachse des ersten Längsträgers (24), vorzugsweise im Wesentlichen parallel zur ersten Ausnehmung (34), erstreckt, wobei ein Abschnitt der zweiten Leitung (22B) sich zumindest teilweise innerhalb und entlang der zweiten Ausnehmung (36) erstreckt.

3. Vorrichtung (16) nach Anspruch 1 oder Anspruch 2, wobei:
die erste Ausnehmung (34) und/oder die zweite Ausnehmung (36) als eine Vertiefung, insbesondere eine Längsnut, ausgebildet ist; und/oder
die erste Ausnehmung (34) und die zweite Ausnehmung (36) voneinander durch einen Steg (38) des ersten Längsträgers (24) getrennt sind.

4. Vorrichtung (16) nach einem der vorherigen Ansprüche, wobei die erste Leitung (22A) so in der ersten Ausnehmung (34) und/oder die zweite Leitung (22B) so in der zweiten Ausnehmung (36) geführt ist, dass es im Wesentlichen zu keiner Leitungslängung und/oder Leitungsverkürzung während einer Schwenkbewegung des Fahrerhauses (12) um das Lager (28) kommt.

5. Vorrichtung (16) nach einem der vorherigen Ansprüche, wobei das Lager (28) eine Schwenkachse (A) definiert, um die das Fahrerhaus (12) schwenkbar ist, und die erste Leitung (22A) und/oder die zweite Leitung (22B) so angeordnet ist, dass sie die Schwenkachse (A) kreuzt oder zumindest annähernd kreuzt.

6. Vorrichtung (16) nach Anspruch 5, wobei ein Knickbereich (40) der ersten Leitung (22A) und/oder der zweiten Leitung (22B) die Schwenkachse (A) kreuzt oder zumindest annähernd kreuzt, wobei, vorzugsweise, der Knickbereich (40) außerhalb der ersten Ausnehmung (34) und/oder zweiten Ausnehmung (36) positioniert ist.

7. Vorrichtung (16) nach einem der vorherigen Ansprüche, ferner aufweisend:
mindestens ein Halteelement (42, 44), das den Abschnitt der erste Leitung (22A) in der ersten Ausnehmung (34) und/oder den Abschnitt der zweiten Leitung (22B) in der zweiten Ausnehmung (36) hält.

8. Vorrichtung (16) nach Anspruch 7, wobei das mindestens eine Halteelement (42, 44) den ersten Längsträger (24) in einer Umfangsrichtung um die Längsachse des ersten Längsträgers (24) umgibt.

9. Vorrichtung (16) nach Anspruch 7 oder Anspruch 8, wobei ein Halteelement (42) zwischen zwei nebeneinander angeordneten Vorsprüngen (46, 48) des ersten Längsträgers (24) positioniert ist.

10. Vorrichtung (16) nach einem der Ansprüche 7 bis 9, wobei ein Halteelement (44) zwischen einem Abschnitt mit sich erweiterndem Querschnitt des ersten Längsträgers (24) und einem Vorsprung (50) des ersten Längsträgers (24), der neben den Abschnitt mit sich erweiterndem Querschnitt angeordnet ist, angeordnet ist.

11. Vorrichtung (16) nach Anspruch 9 oder Anspruch 10, wobei der oder die Vorsprünge (46, 48, 50) so ausgebildet sind, dass eine Verschiebung des Halteelements (42, 44) in einer Richtung entlang der Längsachse des ersten Längsträgers (24) durch einen Kontakt mit dem oder den Vorsprüngen (46, 48, 50) begrenzt wird.

12. Vorrichtung (16) nach einem der Ansprüche 7 bis 11, wobei das mindestens eine Halteelement (42, 44) als Kabelbinder ausgebildet ist.

13. Vorrichtung (16) nach einem der vorherigen Ansprüche, wobei die erste Leitung (22A) und/oder die zweite Leitung (22B) eine elektrische, pneumatische oder hydraulische Leitung ist.

14. Vorrichtung (16) nach einem der vorherigen Ansprüche, ferner aufweisend:
einen zweiten Längsträger, insbesondere einen Schwingenarm, mit einem Lager zum schwenkbaren Verbinden des Fahrerhauses (12) mit dem zweiten Längsträger; und
ein Stabilisationsrohr (26), das den ersten Längsträger (24) und den zweiten Längsträger miteinander verbindet.

15. Kraftfahrzeug (10), insbesondere Nutzfahrzeug, mit
einem Fahrerhaus (12);
einem Fahrzeugrahmen (14); und
einer Vorrichtung (16) nach einem der vorherigen Ansprüche, die das Fahrerhaus (12) verschwenkbar mit dem Fahrzeugrahmen (14) verbindet, wobei, vorzugsweise, die erste Leitung (22A) und/oder die zweite Leitung (22B) eine Komponente (18) des Fahrerhauses (12) mit einer rahmenfest am Fahrzeugrahmen (14) angebrachten Komponente (20) verbindet.

## Claims

1. Device (16) for the pivotable connection of a driver's cab (12) to a vehicle frame (14) of a motor vehicle (10), in particular a commercial vehicle, having:
a first line (22A) for connection to a component (18) of the driver's cab (12);
**characterized by:**
a first longitudinal member (24), which is a swing arm, with:
a bearing (28) for the pivotable connection of the driver's cab (12) to the first longitudinal member (24); and
a first recess (34), which extends along a longitudinal axis of the first longitudinal member (24), wherein one section of the first line (22A) extends at least partially within and along the first recess (34) .

2. Device (16) according to Claim 1, furthermore having:
a second line (22B), wherein
the first longitudinal member (24) has a second recess (36), which extends along the longitudinal axis of the first longitudinal member (24), preferably substantially parallel to the first recess (34), wherein one section of the second line (22B) extends at least partially within and along the second recess (36).

3. Device (16) according to Claim 1 or Claim 2, wherein:
the first recess (34) and/or the second recess (36) are/is designed as a depression, in particular a longitudinal groove; and/or
the first recess (34) and the second recess (36) are separated from one another by a web (38) of the first longitudinal member (24).

4. Device (16) according to one of the preceding claims, wherein the first line (22A) is routed in such a way in the first recess (34) and/or the second line (22B) is routed in such a way in the second recess (36) that substantially no lengthening of the line and/or shortening of the line occur/occurs during a pivoting movement of the driver's cab (12) around the bearing (28).

5. Device (16) according to one of the preceding claims, wherein the bearing (28) defines a pivoting axis (A) around which the driver's cab (12) can be pivoted, and the first line (22A) and/or the second line (22B) are/is arranged in such a way that they/it cross/crosses or at least approximately cross/crosses the pivoting axis (A).

6. Device (16) according to Claim 5, wherein a bending region (40) of the first line (22A) and/or of the second line (22B) crosses or at least approximately crosses the pivoting axis (A), wherein the bending region (40) is preferably positioned outside the first recess (34) and/or the second recess (36).

7. Device (16) according to one of the preceding claims, furthermore having:
at least one holding element (42, 44), which holds the section of the first line (22A) in the first recess (34) and/or the section of the second line (22B) in the second recess (36).

8. Device (16) according to Claim 7, wherein the at least one holding element (42, 44) surrounds the first longitudinal member (24) in a circumferential direction around the longitudinal axis of the first longitudinal member (24).

9. Device (16) according to Claim 7 or Claim 8, wherein a holding element (42) is positioned between two adjacently arranged projections (46, 48) of the first longitudinal member (24).

10. Device (16) according to one of Claims 7 to 9, wherein a holding element (44) is arranged between a section with a widening cross section of the first longitudinal member (24) and a projection (50) of the first longitudinal member (24), which is arranged adjacent to the section with a widening cross section.

11. Device (16) according to Claim 9 or Claim 10, wherein the projection or projections (46, 48, 50) are/is designed in such a way that displacement of the holding element (42, 44) in a direction along the longitudinal axis of the first longitudinal member (24) is limited by contact with the projection or projections (46, 48, 50).

12. Device (16) according to one of Claims 7 to 11, wherein the at least one holding element (42, 44) is designed as a cable tie.

13. Device (16) according to one of the preceding claims, wherein the first line (22A) and/or the second line (22B) are/is an electric, pneumatic or hydraulic line.

14. Device (16) according to one of the preceding claims, furthermore having:
a second longitudinal member, in particular a swing arm, with a bearing for the pivotable connection of the driver's cab (12) to the second longitudinal member; and
a tubular antiroll bar (26), which connects the first longitudinal member (24) and the second longitudinal member to one another.

15. Motor vehicle (10), in particular commercial vehicle, having
a driver's cab (12);
a vehicle frame (14); and
a device (16) according to one of the preceding claims, which connects the driver's cab (12) pivotably to the vehicle frame (14), wherein the first line (22A) and/or the second line (22B) preferably connect/connects a component (18) of the driver's cab (12) to a component (20) attached to the vehicle frame (14) in such a way as to be fixed with respect to said frame.

## Revendications

1. Dispositif (16) permettant de relier de manière pivotante une cabine de conduite (12) à un châssis (14) d'un véhicule automobile (10), en particulier d'un véhicule utilitaire, comprenant :
une première ligne (22A) destinée à être raccordée à un composant (18) de la cabine de conduite (12) ;
**caractérisé par** :
un premier longeron (24), qui est un bras oscillant, comportant :
un palier (28) permettant de relier de manière pivotante la cabine de conduite (12) au premier longeron (24) ; et
une première cavité (34), qui s'étend le long d'un axe longitudinal du premier longeron (24), une partie de la première ligne (22A) s'étendant au moins partiellement à l'intérieur de la première cavité (34) et le long de celle-ci.

2. Dispositif (16) selon la revendication 1, comprenant en outre :
une deuxième ligne (22B), dans lequel
le premier longeron (24) comprend une deuxième cavité (36), qui s'étend le long de l'axe longitudinal du premier longeron (24), de préférence sensiblement parallèlement à la première cavité (34), dans lequel une partie de la deuxième ligne (22B) s'étend au moins partiellement à l'intérieur de la deuxième cavité (36) et le long de celle-ci.

3. Dispositif (16) selon la revendication 1 ou la revendication 2, dans lequel :
la première cavité (34) et/ou la deuxième cavité (36) est/sont réalisée(s) sous la forme d'un évidement, en particulier sous la forme d'une rainure longitudinale ; et/ou
la première cavité (34) et la deuxième cavité (36) sont séparées l'une de l'autre par une nervure (38) du premier longeron (24).

4. Dispositif (16) selon l'une des revendications précédentes, dans lequel la première ligne (22A) est guidée dans la première cavité (34) et/ou la deuxième ligne (22B) est guidée dans la deuxième cavité (36) de telle sorte que sensiblement aucun allongement de ligne et/ou raccourcissement de ligne n'est produit pendant un mouvement de pivotement de la cabine de conduite (12) autour du palier (28).

5. Dispositif (16) selon l'une des revendications précédentes, dans lequel le palier (28) définit un axe de pivotement (A) autour duquel la cabine de conduite (12) est pivotante, et la première ligne (22A) et/ou la deuxième ligne (22B) est/sont disposée(s) de telle sorte qu'elle(s) croise(nt) ou croise(nt) au moins approximativement l'axe de pivotement (A).

6. Dispositif (16) selon la revendication 5, dans lequel une région coudée (40) de la première ligne (22A) et/ou de la deuxième ligne (22B) croise ou croise au moins approximativement l'axe de pivotement (A), dans lequel, de préférence, la région coudée (40) est positionnée à l'extérieur de la première cavité (34) et/ou de la deuxième cavité (36).

7. Dispositif (16) selon l'une des revendications précédentes, comprenant en outre :
au moins un élément de retenue (42, 44), qui retient la partie de la première ligne (22A) dans la première cavité (34) et/ou la partie de la deuxième ligne (22B) dans la deuxième cavité (36).

8. Dispositif (16) selon la revendication 7, dans lequel l'au moins un élément de retenue (42, 44) entoure le premier longeron (24) dans une direction périphérique autour de l'axe longitudinal du premier longeron (24).

9. Dispositif (16) selon la revendication 7 ou la revendication 8, dans lequel un élément de retenue (42) est positionné entre deux saillies (46, 48), disposées l'une à côté de l'autre, du premier longeron (24).

10. Dispositif (16) selon l'une des revendications 7 à 9, dans lequel un élément de retenue (44) est disposé entre une partie, de section transversale s'agrandissant, du premier longeron (24) et une saillie (50) du premier longeron (24), qui est disposée près de la partie de section transversale s'agrandissant.

11. Dispositif (16) selon la revendication 9 ou la revendication 10, dans lequel la ou les saillies (46, 48, 50) sont réalisées de telle sorte qu'un déplacement de l'élément de retenue (42, 44) dans une direction le long de l'axe longitudinal du premier longeron (24) est limité par un contact avec la ou les saillies (46, 48, 50).

12. Dispositif (16) selon l'une des revendications 7 à 11, dans lequel l'au moins un élément de retenue (42, 44) est réalisé sous forme de porte-câbles.

13. Dispositif (16) selon l'une des revendications précédentes, dans lequel la première ligne (22A) et/ou la deuxième ligne (22B) est/sont une ligne électrique, pneumatique ou hydraulique.

14. Dispositif (16) selon l'une des revendications précédentes, comprenant en outre :
un deuxième longeron, en particulier un bras oscillant, comportant un palier permettant de relier de manière pivotante la cabine de conduite (12) au deuxième longeron ; et
un tube de stabilisation (26), qui relie l'un à l'autre le premier longeron (24) et le deuxième longeron.

15. Véhicule automobile (10), en particulier véhicule utilitaire, comportant
une cabine de conduite (12) ;
un châssis de véhicule (14) ; et
un dispositif (16) selon l'une des revendications précédentes, qui relie la cabine de conduite (12) au châssis de véhicule (14) de manière pivotante, dans lequel, de préférence, la première ligne (22A) et/ou la deuxième ligne (22B) relie(nt) un composant (18) de la cabine de conduite (12) à un composant (20) monté sur le châssis de véhicule (14) de manière solidaire du châssis.
